# EUROPEAN PATENT SPECIFICATION

(11) **EP 1 840 417 B1**
(45) Date of publication and mention of the grant of the patent: **03.03.2010**
(21) Application number: 07103688.3
(22) Date of filing: 07.03.2007
(51) Int. Cl.: F16H 9/18, F16H 57/02

(54) **Power Unit**
Triebwerk
Bloc d'alimentation

(30) Priority: 28.03.2006 JP 2006088804; 28.03.2006 JP 2006088803
(43) Date of publication of application: 03.10.2007
(73) Proprietor: Honda Motor Co., Ltd., Minato-ku Tokyo 107-8556 (JP)
(72) Inventor: Ishikawa, Hideo, Saitama 351-0193 (JP); Oki, Kenji, Saitama 351-0193 (JP)
(74) Representative: Rupp, Christian

(56) References cited:
- EP-A1- 0 758 050
- WO-A-2006/006435
- GB-A- 2 342 127
- JP-A- 2 173 447
- JP-A- 2000 111 331
- JP-A- 2002 054 705
- JP-A- 2002 235 822
- JP-A- 2006 029 397
- US-A1- 2004 102 267

## Description

The present invention relates to power units with internal combustion engines and belt continuously variable transmissions. More particularly, the invention relates to a power unit with a belt continuously variable transmission performing continuous speed variation with a driving motor.

An example of this kind of power unit is disclosed in Japanese Patent Application Document No. 2005-114057, also designated as Patent Document 1 in the following.

In a power unit disclosed in an embodiment of Patent Document 1, the left side of a unit case forming a crankcase of an internal combustion engine is extended rearward to form a transmission case. On the lateral opposite side of a crank chamber of the transmission case, a transmission chamber for storing a belt continuously variable transmission is formed while being covered with a transmission case cover.

In the belt continuously variable transmission, continuous speed variation is performed by axially moving a movable pulley half body of a drive pulley of the drive pulley and driven pulley around which a transmission belt is wound and changing a winding diameter of the transmission belt, and a driving motor is used for moving the movable pulley half body. In other words, the belt continuously variable transmission is configured so that rotational driving of the driving motor is transmitted to the axial movement of the movable pulley half body through a reduction gear mechanism and a screw mechanism.

The driving motor and a reduction gear of the reduction gear mechanism are supported by a dedicated actuator cover for covering a front part of the transmission chamber on the lateral opposite side (left side) of the crank chamber of the transmission case from the outside (left side) of a vehicle body.
The actuator cover is a separate part from the transmission case cover.

As described above, a gear shaft of the reduction gear mechanism is supported and covered by the actuator cover that is a separate part from the transmission case cover for supporting the drive pulley and driven pulley of the belt continuously variable transmission, and covering the belt continuously variable transmission. For this reason, the number of parts and man-hours for assembly is increased, and it is difficult to enhance the rigidity of the transmission case itself.
Moreover, the driving motor is mounted so as to protrude outward from the actuator cover on the outside of the vehicle body. For this reason, the whole power unit cannot be miniaturized by protruding the driving motor toward the outside, and adhesion of water or mud is unavoidable.

Another power unit according to the preamble of claim 1 is known from WO 2006/006435 A.

Accordingly, the present invention is made in view of the above-mentioned problems.
The object of the present invention is to provide a power unit wherein the number of parts and man-hours for assembly can be reduced, and the rigidity of the transmission case itself can be enhanced.
A further object of the present invention is to provide the power unit provided with a variable speed driving motor, wherein miniaturization and improvement of external appearance can be attained, and the variable speed driving motor can be protected from water or mud.

In order to accomplish the above-mentioned object, the invention described in Claim 1 provides a power unit including: a unit case composed of a crankcase forming a crank chamber of an internal combustion engine, and a transmission case provided on one side of the crankcase and partly forming a transmission chamber for storing a belt continuously variable transmission; and a transmission case cover for covering the transmission case and forming the transmission chamber, the power unit performing continuous speed variation by changing a winding diameter of a pulley around which a transmission belt of the belt continuously variable transmission is wound, through a variable speed drive mechanism by driving of a variable speed driving motor, wherein the transmission case cover is mounted on the transmission case so as to cover the belt continuously variable transmission while journaling reduction gears of the variable speed drive mechanism along with a drive pulley and a driven pulley of the belt continuously variable transmission.

According to the present invention, the variable speed driving motor is, further, disposed side by side with a starter motor in the vicinity of a power unit hanger above the crank chamber of the internal combustion engine.

The invention described in Claim 2 is characterized in that, in the power unit described in Claim 1, the transmission case and the transmission case cover are joined to each other at mating faces continuously and annularly formed on the same plane.

The invention described in Claim 3 is characterized in that, in the power unit described in Claim 1 or 2, the transmission case cover is provided with an operation quantity detecting means for detecting a quantity of the operation of the variable speed drive mechanism using the variable speed driving motor.

The invention described in Claim 4 is characterized in that, in the power unit described in any of Claims 1 to 3, the variable speed driving motor is mounted in the transmission case from a body inside provided with the crank chamber.

The invention described in Claim 5 is characterized in that, in the power unit described in any of Claims 1 to 4, the internal combustion engine has a cylinder largely tilted forward, and the variable speed driving motor is disposed on an upper part of the cylinder.

The invention described in Claim 6 is characterized in that, in the power unit described in any of Claims 1 to 5, the variable speed driving motor is disposed on an upper part of the crank chamber of the internal combustion engine.

According to the power unit described in Claim 1, without separately providing a dedicated member for supporting reduction gears of a variable speed drive mechanism, one transmission case cover for journaling a drive pulley and a driven pulley in cooperation with a transmission case is mounted to the transmission case while also journaling the reduction gears of the variable speed drive mechanism. Therefore, the number of parts and man-hours for assembly can be reduced, and the cost can be reduced. Also, the rigidity of the transmission case itself can be enhanced.

According to the power unit described in Claim 2, the transmission case and the transmission case cover are joined to each other at mating faces continuously and annularly formed on the same plane. Therefore, since the mating faces of the transmission case and the transmission case cover are plane surfaces having no cutout, the shapes of parts may be simplified, and the cost may be reduced. Also, fastening force of the transmission case cover to the transmission case may be increased.

According to the power unit described in Claim 3, the transmission case cover is provided with an operation quantity detecting means for detecting a quantity of the operation of the variable speed drive mechanism using the variable speed driving motor. Therefore, no dedicated component for supporting the operation quantity detecting means is required, and the operation quantity detecting means may be readily installed in a small layout space.

According to the power unit described in Claim 4, a variable speed driving motor for performing speed variation by changing a winding diameter of a pulley around which a transmission belt of a belt continuously variable transmission is wound, is mounted in a transmission case from a body inside provided with a crank chamber. Therefore, the variable speed driving motor is prevented from protruding outside a body, and the power unit can be miniaturized, and improved in external appearance. Also, since the variable speed driving motor is provided inside the body, the variable speed driving motor can be readily protected from water or mud spattered up from the ground, and adhesion of water or mud is avoidable, thereby easily improving durability of the variable speed driving motor.

According to the power unit described in Claim 5, since the variable speed driving motor is disposed on an upper part of a cylinder largely tilted forward to become higher in the height from the ground, the variable speed driving motor may be protected from water or mud.
Thus, adhesion of water or mud is avoidable, and durability of the variable speed driving motor may be improved.

According to the power unit described in Claim 6, the variable speed driving motor is disposed above the crank chamber of an internal combustion engine. Therefore, the lower part of the variable speed driving motor can be protected by the crank chamber, and the variable speed driving motor may be surely protected from water or mud. Also, the variable speed driving motor may be mounted from the upper part of a unit case, and an assembly work may be easily and surely carried out.
Furthermore, the variable speed driving motor is increasingly protected from water or mud.

According to the power unit described in Claim 7, the variable speed driving motor is disposed side by side with a starter motor in the vicinity of a power unit hanger above the crank chamber of the internal combustion engine. Thus, it is structurally easy to ensure support strength. Also, since heavyweight objects such as motors are disposed together in the vicinity of the power unit hanger, inertia force caused by vibration of the power unit may be reduced, and riding vibration may be reduced.
- Fig. 1: is a general side view of a scooter type motorcycle according to an embodiment of the present invention.
- Fig. 2: is a perspective view of a power unit and its periphery as seen from an oblique rear part.
- Fig. 3: is a partially-omitted left side view of the power unit.
- Fig. 4: is a development sectional view of the power unit taken approximately along the line IV-IV of Fig. 3.
- Fig. 5: is a left side view of a transmission case.
- Fig. 6: is a right side view of the transmission case.
- Fig. 7: is a right side view of a transmission case cover.
- Fig. 8: is a left side view of a reduction gear cover.
- Fig. 9: is a right side view of the reduction gear cover.
- Fig. 10: is a left side view of an air exhaust duct.
- Fig. 11: is a front view of the air exhaust duct.
- Fig. 12: is a rear sectional view of the power unit.

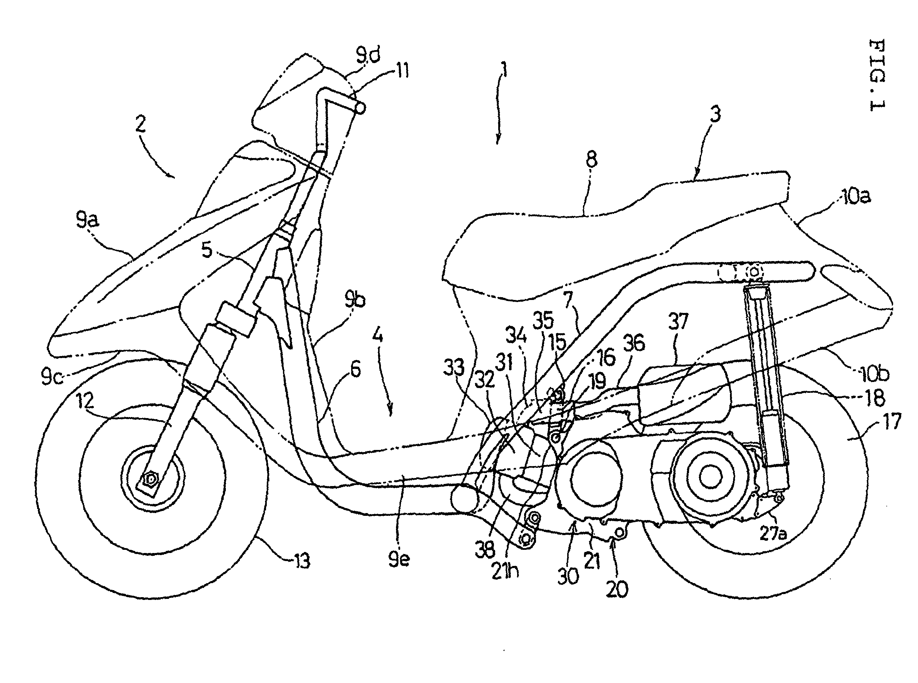

An embodiment of the present invention will be described below with reference to Figs. 1 to 12. Fig. 1 is a side view of a scooter type motorcycle 1 according to an embodiment of the present invention. A body front part 2 and a body rear part 3 are connected through a lower floor part 4. A body frame forming a frame of a vehicle body is generally composed of a down tube 6 and a main pipe 7.

More specifically, the down tube 6 is extended downward from a head pipe 5 of the body front part 2, and is horizontally bent at a lower end. Also, the down tube 6 is extended rearward below the floor part 4, and connected to the pair of right and left main pipes 7 at a rear end. The pair of main pipes 7 rises diagonally backward from its connection part, and is horizontally bent at a prescribed height to be extended rearward.

A fuel tank and a storage box are supported by the main pipe 7, and a seat 8 is disposed above the main pipe 7.
In the body front part 2, on the other hand, a handlebar 11 is provided on the upper part of the head pipe 5 while being journalled to the head pipe 5, and a front fork 12 is extended on the lower part thereof. A front wheel 13 is journalled to a lower end of the front fork 12.

A bracket 15 is provided in a protruding state in the vicinity of the center of an oblique inclination part of the main pipe 7. A power unit 20 is swingably connected and supported through a link member 16 journalled to the bracket 15.

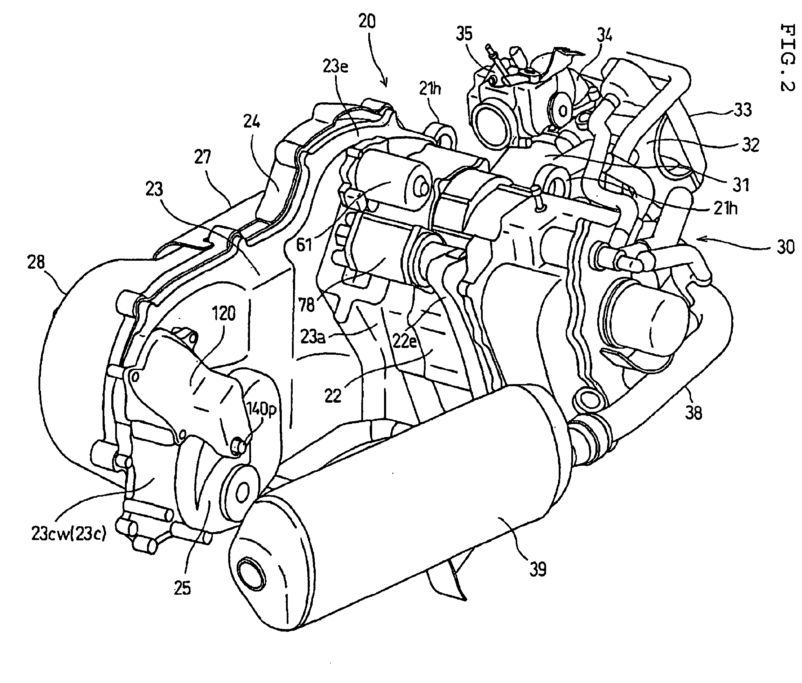

The power unit 20 is integrally provided with an internal combustion engine 30 in front of a unit case 21, a belt continuously variable transmission 50 rearward from the internal combustion engine 30, and a reduction gear mechanism 110 in the rear of the unit case 21. A rear wheel 17 is mounted with an output shaft of the reduction gear mechanism 110 as a rear axle 114 (see Fig. 2).

In the power unit 20, in front of the unit case 21, a pair of right and left power unit hangers 21h and 21h protrudes forward on the upper part of a front face of the unit case 21, and is connected to a lower end of the link member 16 through a pivot shaft 19. On the other hand, in the freely swingable rear part of the unit case 21, a rear cushion 18 is installed between a bracket 27a on a rear end of the reduction gear mechanism 110, and the main pipe 7 (see Fig. 1).
A bracket 21b protrudes forward from a lower part in front of the unit case 21, and is connected to an extension part of the down tube 6 by a link member 6a.

In the internal combustion engine 30 serving as a single cylinder four-stroke cycle internal combustion engine, a cylinder block 31, cylinder head 32, and a cylinder head cover 33 are overlapped from the front face of the unit case 21, and protrude in an attitude largely tilting forward so as to be in an approximately horizontal state.

A throttle body 35 is connected to an intake pipe 34 extended upward from an upper intake port of the cylinder head 32, and bent rearward. A connection pipe 36 extended rearward from the throttle body 35 is connected to an air cleaner 37 disposed along the left of the rear wheel 17 on the rear half part of the unit case 21.
An exhaust pipe 38 extended downward from a lower exhaust port of the cylinder head 32 and bent rearward is extended rearward so as to be offset to the right to be connected to a right muffler 39 of the rear wheel 17 (see Fig. 2).

The body front part 2 is covered with a front cover 9a and a rear cover 9b from front and rear sides, and covered with a front lower cover 9c from right and left sides. The center of the handlebar 11 is covered with a handlebar cover 9d.
The floor part 4 is covered with a side cover 9e, and the body rear part 3 is covered with a body cover 10a and a tail side cover 10b from right and left sides.

Fig. 2 is a perspective view of the power unit 20 and its periphery as seen from an oblique rear portion.

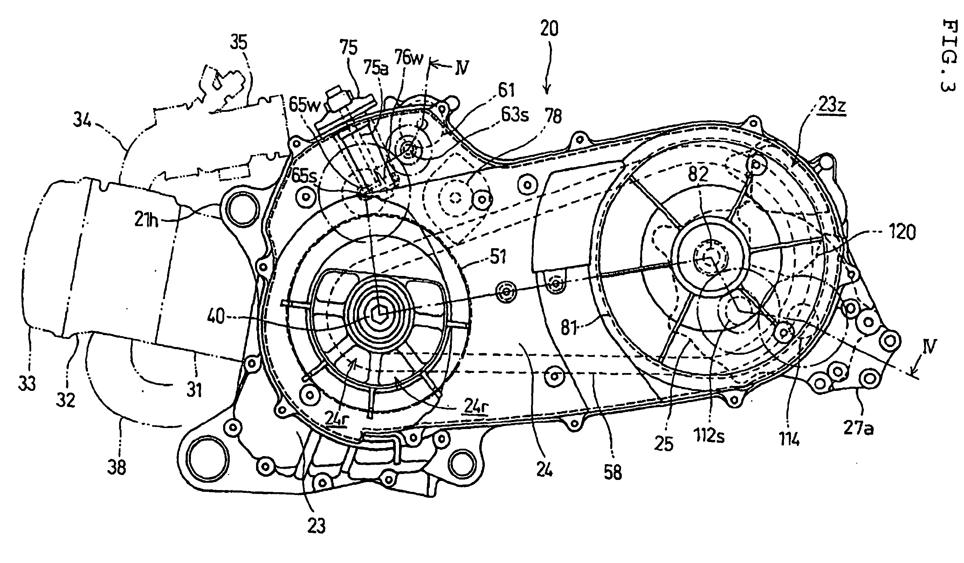

Fig. 3 is a partially-omitted left side view of the power unit 20.

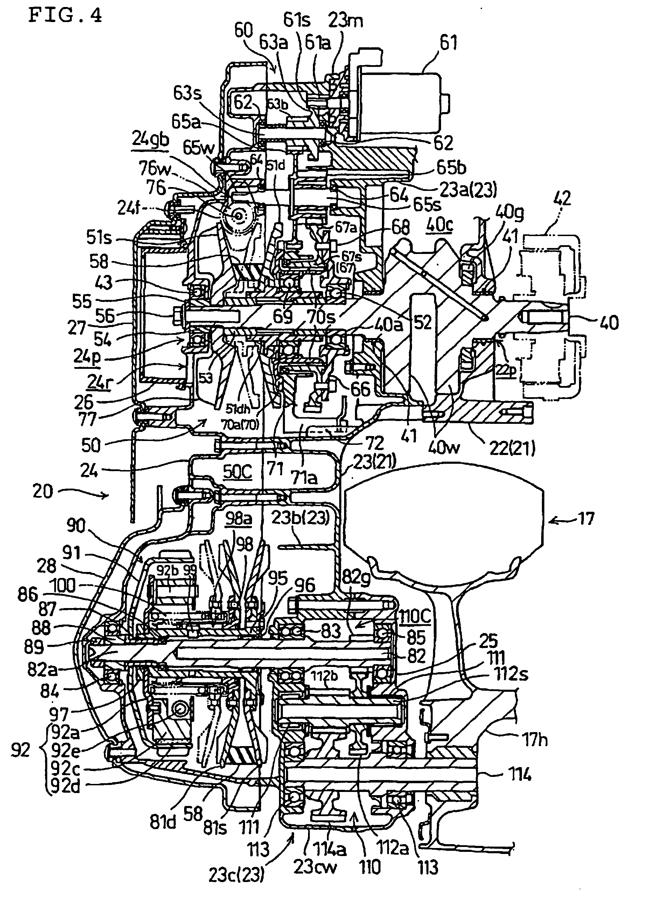

Fig. 4 is a development sectional view of the power unit 20 taken approximately along the line IV-IV of Fig. 3.

The unit case 21 is split into right and left sides, and a left unit case opposite to a right unit case 22 is extended rearward to form a transmission case 23. The transmission case 23 forms a crank chamber 40C for storing a crankshaft 40 with a left crankcase part 23a formed on the front right side combined with the right unit case 22, a transmission chamber 50C for storing the belt continuously variable transmission 50 with a transmission case part 23b formed on the left side from the front to the rear covered with a transmission case cover 24 from the left side, and a reduction gear chamber 110C for storing the reduction gear mechanism 110 with a reduction gear part 23c formed on the rear right side covered with a reduction gear cover 25.

That is to say, the unit case 21 is composed of a so-called crankcase forming the crank chamber 40C with the left crankcase part 23a combined with the right unit case 22, and the transmission case 23 partly forming the transmission chamber 50C.
The left side face of the transmission case cover 24 has a front part covered with an air intake duct 26 and a front L cover 27, and a rear part covered with a rear L cover 28.

In the crank chamber 40C, the crankshaft 40 is rotatably supported in right and left bearing circular holes 22p and 23p of the unit case 21 through main bearings 41 and 41, and a crank web 40w is stored. The right extension part of extension parts horizontally extending in the right and left directions is provided with an AC generator 42, and the left extension part is provided with a drive pulley 51 of the belt continuously variable transmission 50 as well as a variable speed drive mechanism 60.

The left end of the crankshaft 40 is journalled to a bearing circular hole 24p of the transmission case cover 24 through a collar 54 by a bearing 43.
The drive pulley 51 is composed of a fixed pulley half body 51s and a movable pulley half body 51d.
In the left extension part from a step part 40a to change into a small diameter of the crankshaft 40, a bearing 52, a guide sleeve 53, the fixed pulley half body 51s, and the collar 54 are fitted in this order from right to left, and are fastened to the left end face of the crankshaft 40 through a washer 55 by a bolt 56. Thus, an inner ring of the bearing 52, the guide sleeve 53, a base of the fixed pulley half body 51s, and the collar 54 are tightened to be integral with the crankshaft 40.

Therefore, the fixed pulley half body 51s is sandwiched between the guide sleeve 53 and the collar 54, and is fixed integrally with the crankshaft 40 to rotate integrally with the crankshaft 40.

On the other hand, the movable pulley half body 51d on the right side of and opposite to the fixed pulley half body 51s rotates with the crankshaft 40, with a cylindrical movable pulley hub 51dh serving as a base of the movable pulley half body 51d partially spline-fitted to the guide sleeve 53, and is freely slidable in an axial direction.

In this manner, the right movable pulley half body 51d opposite to the left fixed pulley half body 51s is rotatable with the crankshaft 40, and axially slidable to approach or be separated from the fixed pulley half body 51s. Between tapered faces of both pulley half bodies 51s and 51d facing each other, a V-belt 58 is sandwiched and wound.

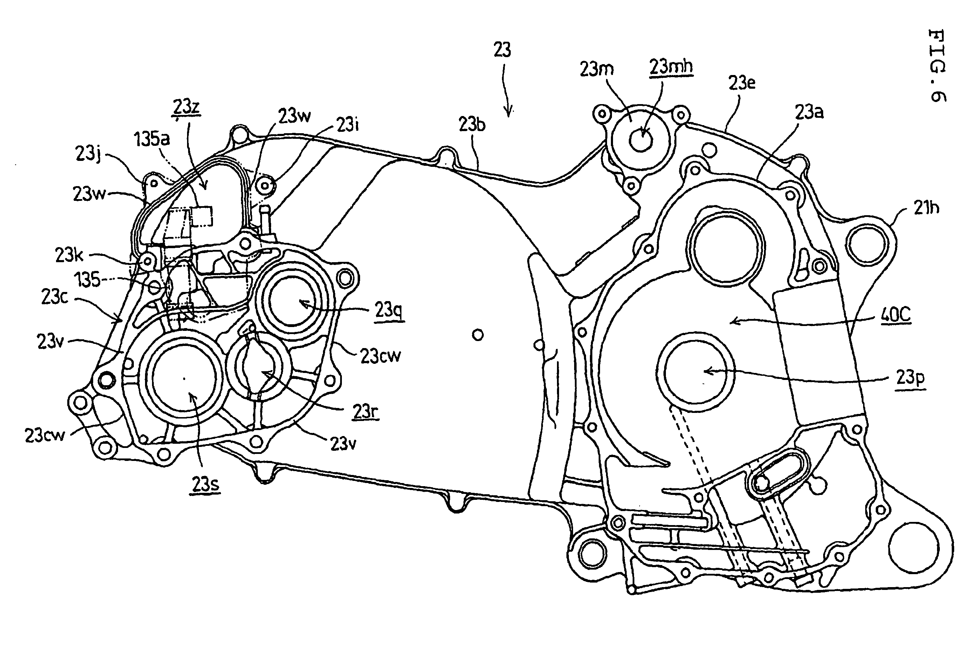

As shown in a right side view of the transmission case 23 in Fig. 6, in the transmission case 23, the transmission case part 23b formed on the left side of the left crankcase part 23a formed on the front right side of the transmission case 23 is largely swollen upward. On the upper part of a swollen part 23e, a variable speed driving motor 61 serving as a driving source of the variable speed drive mechanism 60 is mounted on an upper part of an expansion part 23e.

A motor mounting seat 23m is formed on the upper part of the right side of the expansion part 23e expanded upward on the front part of the transmission case part 23b, and a circular hole 23mh is bored in the center of the motor mounting seat 23m.

The variable speed driving motor 61 is mounted on the motor mounting seat 23m from the right side (the inside of the vehicle body). A drive shaft 61s of the variable speed driving motor 61 protrudes into the left transmission chamber 50C through the circular hole 23mh in the center. Therefore, the variable speed driving motor 61 is disposed on the upper part of the crank chamber 40C formed by the left crankcase part 23a and the right unit case 22. The variable speed driving motor 61 is disposed on the upper part by the largely forward-tilting cylinder block 31 (see Fig. 3).

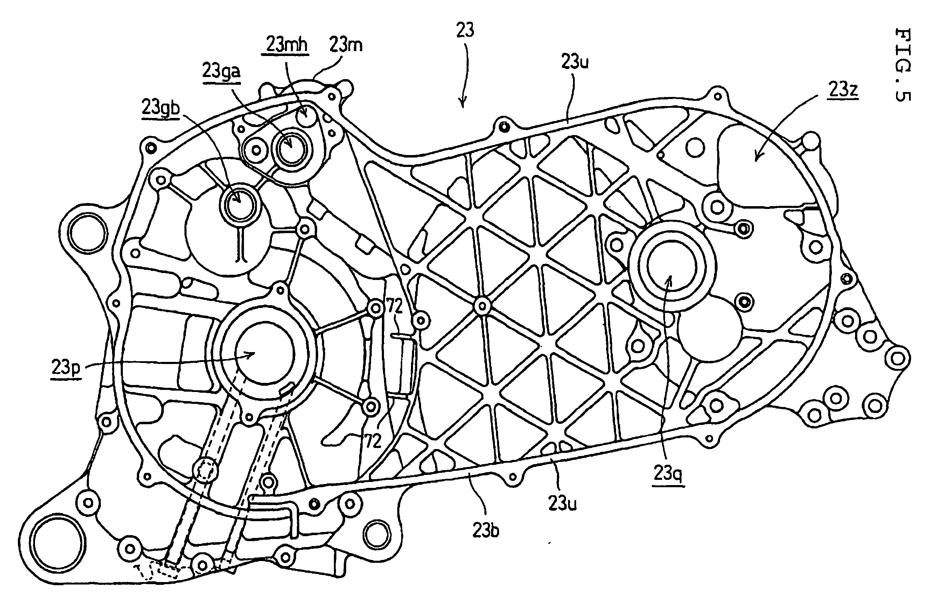

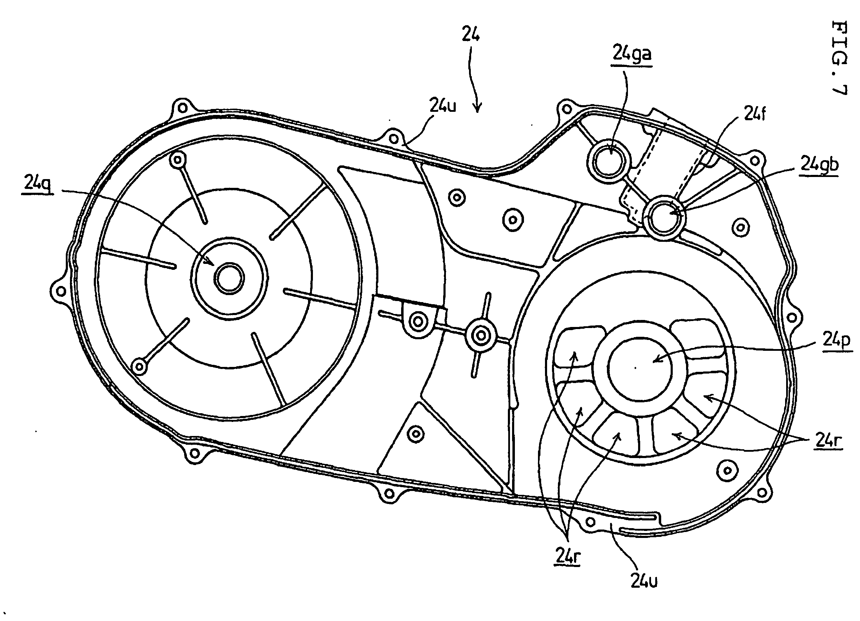

Referring to a left side view of the transmission case 23 in Fig. 5, a bearing recessed part 23ga is formed obliquely beneath the circular hole 23mh, and another bearing recessed part 23gb is also formed on the obliquely lower part on the front side of the bearing recessed part 23ga. On the other hand, referring to Fig. 7 that is a right side view of the transmission case cover 24, a bearing recessed part 24ga and a bearing recessed part 24gb are formed on the opposite side of the bearing recessed part 23ga and the bearing recessed part 23gb of the transmission case 23.

As shown in Fig. 4, either end of a first reduction gear shaft 63s is journalled to the bearing recessed part 23ga and the bearing recessed part 24ga facing each other through bearings 62 and 62. A large diameter gear 63a integral with the first reduction gear shaft 63s is engaged with a drive gear 61a formed on the drive shaft 61s of the variable speed driving motor 61.
In the same manner, the right end and the left side part of a second reduction gear shaft 65s are respectively journalled to the bearing recessed part 23gb and the bearing recessed part 24gb facing each other through bearings 64 and 64. A large diameter gear 65a integral with the second reduction gear shaft 65s is engaged with a small diameter gear 63b integral with the reduction gear shaft 63s.

A female screw member 67 is fixed to a disc boss member 66 with a base end part supported on an outer ring of the bearing 52 fitted to the crankshaft 40, by a bolt 68. A large diameter gear 67a is formed in a flange part of the female screw member 67, and is engaged with a small diameter gear 65b integral with the second reduction gear shaft 65s. On an inner peripheral surface of a cylindrical part 67s of the female screw member 67, a female screw (screw) is formed.

A male screw member 70 is supported through a bearing 69 fitted to an outer periphery of the movable pulley hub 51dh supporting the movable pulley half body 51d and freely slidable in the axial direction. A cylindrical part 70s of the male screw member 70 is located inside the cylindrical part 67s of the female screw member 67. A male screw formed on an outer peripheral surface of the cylindrical part 70s is threadably mounted on the female screw on an inner peripheral surface of the cylindrical part 67s. In the male screw member 70, the left end of the cylindrical part 70s is exposed leftward from a left opening end of the cylindrical part 67s of the female screw member 67, and a flange part 70a is extended in a centrifugal direction along a back face of the movable pulley half body 51d from the left end.

An annular member 71 is fixed to an outer peripheral surface of the flange part 70a of the male screw member 70. The rear part of the annular member 71 is extended rightward in the axial direction so as to go around the outside of the large diameter gear 67a of the female screw member 67. A pair of upper and lower guide pieces 72 and 72 protruding into the transmission chamber 50C of the transmission case 23 is configured to regulate rotation of an extension part 71a by holding the extension part 71a therebetween, and guide axial movement (see Figs. 4 and 5).

Therefore, the male screw member 70 supported on the movable pulley hub 51dh integral with the movable pulley half body 51d through the bearing 69 is slidable only in the axial direction with the rotation regulated by the guide pieces 72 and 72.

The variable speed drive mechanism 60 is configured as above. When the variable speed driving motor 61 is driven to rotate the drive gear 61a formed in the drive shaft 61s, the large diameter gear 63a of the first reduction gear shaft 63s engaged with the drive gear 61a is rotated at a reduced speed along with the small diameter gear 63b. Also, the large diameter gear 65a of the second reduction gear shaft 65s engaged with the small diameter gear 63b is rotated at a reduced speed along with the small diameter gear 65b. Furthermore, the large diameter gear 67a of the female screw member 67 engaged with the small diameter gear 65b is rotated at a reduced speed, and the female screw member 67 is rotated.

When the female screw member 67 is rotated, the male screw member 70 threadably mounted on the female screw member 67 is axially moved by a screw mechanism since the rotation of the male screw member 70 is regulated. The axial movement of the male screw member 70 allows the movable pulley hub 51dh to axially move integrally with the movable pulley half body 51d through the bearing 69, and allows the movable pulley half body 51d to approach or be separated from the fixed pulley half body 51s.

Since the movable pulley hub 51dh integrally supporting the movable pulley half body 51d is spline-fitted to the guide sleeve 53 integral with the crankshaft 40, the movable pulley half body 51d is axially moved while rotating along with the crankshaft 40.

In this manner, the movable pulley half body 51d approaches or is separated from the fixed pulley half body 51s by forward and reverse rotation of the variable speed driving motor 61, thereby changing the winding diameter of the V-belt 58 wound between tapered faces of both pulley half bodies 51s and 51d facing each other to perform the continuous speed variation.

In an expansion part 24e of the transmission case cover 24 corresponding to the expansion part 23e that is expanded upward on the front part of the transmission case 23, a tubular projection part 24f is formed obliquely downward from an upper wall on the front part of the transmission case cover 24 (see Fig. 7). The lower part of the tubular projection part 24f is superposed on and communicate with the bearing recessed part 24gb journaling the second reduction gear shaft 65s (see Fig. 4).

A rotating sensor 75 serving as a rotary potentiometer is mounted on an upper end opening of the tubular projection part 24f so as to close the opening. A rotary operation shaft 75a of the rotating sensor 75 is extended obliquely downward in the tubular projection part 24f so that the lower end part thereof is journalled, and a worm wheel 76w is fitted to the lower part of the rotary operation shaft 75a (see Fig. 3).

A worm gear 65w is formed on the left end part protruding into the bearing recessed part 24gb from the bearing 64 of the second reduction gear shaft 65s. The worm gear 65w is engaged with the worm wheel 76w to compose a worm gear mechanism.

Therefore, when the variable speed driving motor 61 is driven to rotate the second reduction gear shaft 65s through engagement of the reduction gears, the rotary operation shaft 75a is rotated through the worm gear mechanism, and a rotational quantity is detected by the rotating sensor 75.

The rotational quantity detected by the rotating sensor 75 corresponds to axially a moving quantity of the movable pulley half body 51d, namely, a variation quantity of the winding diameter of the V-belt 58 around the drive pulley 51.
Therefore, the rotating sensor 75 detects a variable speed state of the belt continuously variable transmission 50.

A cooling fan 77 is formed in a protruding state on the back face (left face) of the fixed pulley half body 51s of the drive pulley 51. A plurality of air intake ports 24r are bored in a portion which the cooling fan 77 of the transmission case cover 24 faces. Thus, by rotation of the crankshaft 40, the fixed pulley half body 51s is rotated along with the cooling fan 77, and cooling air can be sucked into the transmission chamber 50C from the air intake ports 24r.

As shown in Fig. 2 (and Fig. 3), on the upper part of the crank chamber 40C formed by the left crankcase part 23a and the right unit case 22, the variable speed driving motor 61 and a starter motor 78 are vertically arranged.

In an attitude in which each drive shaft is made parallel to the lateral direction on the lower part of the variable speed driving motor 61, the starter motor 78 is mounted from the left side on the left face of an expansion part 22e expanded somewhat rearward on the right side of the right unit case 22. Although not shown in the figures, rotation of the drive shaft of the starter motor 78 is transmitted to a gear 40g (see Fig. 4) integral with the crankshaft 40 through the gear mechanism in the crank chamber 40C, and starting of the internal combustion engine 30 is executed.

As described above, the variable speed driving motor 61 and the starter motor 78 are disposed side by side on the upper part of the crank chamber 40C, and are located relatively in the vicinity of the power unit hanger 21h journaling the front part of the unit case 21.

Next, the structure of the rear part of the power unit 20 will be described. A driven pulley 81 corresponding to the drive pulley 51 of the belt continuously variable transmission 50 is composed of a fixed pulley half body 81s, and a movable pulley half body 81d which face each other, and are supported by a driven shaft 82.

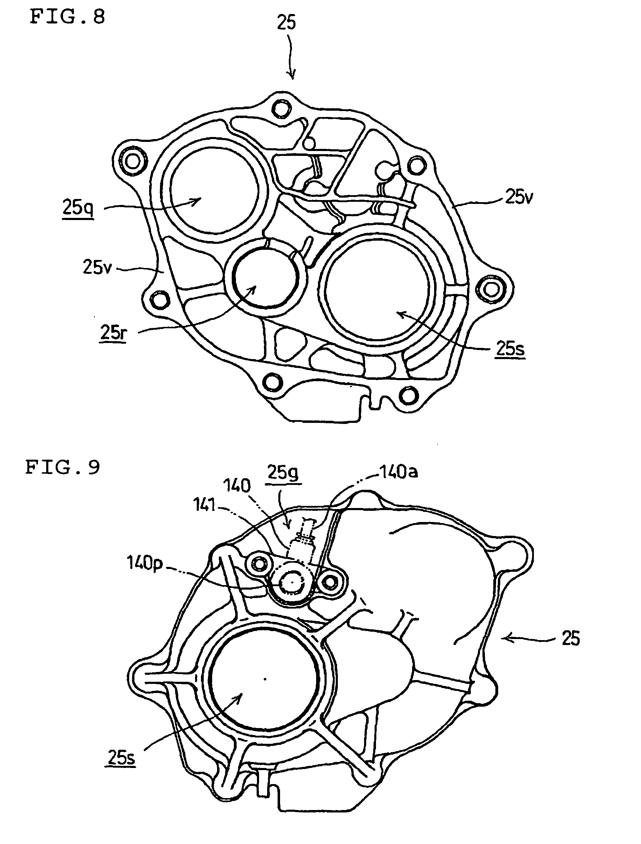

The driven shaft 82 is rotatably journalled to three parts of a bearing circular hole 23q on the rear part of the transmission case 23 (see Figs. 5 and 6), a bearing recessed part 24q of the transmission case cover 24 (see Fig. 7), and a bearing recessed part 25q of the reduction gear cover 25 (see Fig. 8) through bearings 83, 84, and 85 (see Fig. 4).

Referring to Fig. 4, in the left part of the driven shaft 82, a small diameter part 82a in which an outer diameter is made slightly smaller from a step part is formed. A bearing 86, a support sleeve 87, and a collar 88 are fitted to the small diameter part 82a in this order, and are integrally fastened with a nut 89 screwed to an end of the small diameter part 82a.

The bearing 84 is interposed between the bearing recessed part 24q of the transmission case cover 24 and the collar 88. A base of a clutch outer 91 in a bowl shape of a centrifugal clutch 90 is fixed to the support sleeve 87, and rotates integrally with the driven shaft 82.

On an outer periphery of a portion covered with the transmission case cover 24 on the right side of the clutch outer 91 of the driven shaft 82, a cylindrical fixed pulley hub 95 for supporting the fixed pulley half body 81s is interposed between the bearing 86 and a bearing 96, and thus, is relatively and rotatably journalled to the driven shaft 82.

A support plate 92a serving as a clutch inner 92 of the centrifugal clutch 90 is fixed to the left end of the fixed pulley hub 95 by a nut 97.
A base end of an arm 92c is journalled to the support plate 92a by a pivot 92b, and a clutch shoe 92d is fixed to the tip end of the arm 92c. The arm 92c is biased by a spring 92e in a direction in which the clutch shoe 92d is separated from an inner peripheral surface of the clutch outer 91.

On an outer periphery of the cylindrical fixed pulley hub 95 for supporting the clutch inner 92, a cylindrical movable pulley hub 98 for supporting the movable pulley half body 81d is axially and slidably provided. More specifically, a long guide hole 98a is axially formed on the cylindrical movable pulley hub 98, and a guide pin 99 provided in a protruding state on the fixed pulley hub 95 is slidably engaged with the guide hole 98a.

Therefore, while relative rotation between the movable pulley hub 98 and the fixed pulley hub 95 is regulated by the guide pin 99, the movable pulley hub 98 is guided by the guide hole 98a, and is axially slidable on the fixed pulley hub 95.
A coil spring 100 is interposed between the support plate 92a and the movable pulley hub 98 which are mounted integrally with the fixed pulley hub 95, and the movable pulley hub 98 is biased rightward by the coil spring 100.

By the above-described configuration, the movable pulley half body 81d supported by the movable pulley hub 98 is rotated with the fixed pulley half body 81s supported by the fixed pulley hub 95. Also, the movable pulley half body 81d is axially slidable, and is biased in a direction approaching the fixed pulley half body 81s by the coil spring 100.

The V-belt 58 is wound between tapered faces of the fixed pulley half body 81s and the movable pulley hub 98 facing each other, and the winding diameter around the driven pulley 81 is varied in inverse proportion while being linked with the winding diameter on the side of the drive pulley 51, thereby performing the continuous speed variation.

When the rotational speed of the drive pulley 51 exceeds a predetermined rotational speed, the clutch shoe 92d of the clutch inner 92 of the centrifugal clutch 90 is rotated integrally in contact with the inner peripheral surface of the clutch outer 91 to transmit power to the driven shaft 82.

The transmission case 23 forming the transmission chamber 50C for storing the belt continuously variable transmission 50, and the transmission case cover 24, as described above, journal the crankshaft 40 and the driven shaft 82 in cooperation with each other, and also journal the first reduction gear shaft 63s and the second reduction gear shaft 65s of the variable speed drive mechanism 60. Therefore, the number of parts and man-hours for assembly is reduced, and the rigidity of the transmission case 23 itself can be also enhanced.

Furthermore, a mating face 23u of the transmission case 23, and a mating face 24u of the transmission case cover 24 are formed continuously over the whole periphery on the same plane.
Therefore, since the mating faces 23u and 24u of the transmission case 23 and the transmission case cover 24 have no cutout, the shapes of parts can be simplified, and the cost can be reduced. Also, fastening force of the transmission case cover 24 to the transmission case 23 can be increased.

The reduction gear part 23c formed on the right side in the rear of the transmission case 23 is covered with the reduction gear cover 25 to form the reduction gear chamber 110C for storing the reduction gear mechanism 110. Referring to the right side view of the transmission case 23 in Fig. 6, in the reduction gear part 23c, a peripheral wall 23cw protruding rightward from the right side in the rear of the transmission case 23 is formed partially downward, leaving the upper part on the right side in the rear of the transmission case 23.

A triangular air exhaust port 23z is formed at the rear upper corner of a vertical wall perpendicular to the crankshaft 40 of the transmission case 23. Below the air exhaust port 23z, the peripheral wall 23cw of the reduction gear part 23c is formed.

The peripheral wall 23cw of the reduction gear part 23c forms a mating face 23v with an opening end face continuous on the same plane, and the mating face 23v is formed in an approximately diamond shape with the right side view in Fig. 6. The bearing circular hole 23q for journaling the driven shaft 82 is provided on the front upper corner of the inside of the peripheral wall 23cw. A bearing recessed part 23r is formed on the obliquely lower part of the bearing circular hole 23q, and another bearing recessed part 23s having a large diameter is formed on the rear lower corner.

Referring to Fig. 8 that is a left side view of the reduction gear cover 25, in the reduction gear cover 25, a mating face 25v facing and joined to the mating face 23v of the peripheral wall 23cw is formed in a diamond shape. The bearing recessed part 25q is formed inside the mating face 25v, facing the bearing circular hole 23q of the transmission case 23. A bearing recessed part 25r and a bearing circular hole 25s are formed, facing the bearing recessed part 23r and the bearing recessed part 23s.

As shown in Fig. 4, either end of a reduction gear shaft 112s is journalled to the bearing recessed part 23r and the bearing recessed part 25r facing each other through bearings 111 and 111. A large diameter gear 112a integral with the reduction gear shaft 112s is engaged with a small diameter gear 82g formed in the driven shaft 82.

In the same manner, the left end, and slightly right part in the center of the rear axle 114 are journalled to the bearing recessed part 23s and the bearing circular hole 25s facing each other through bearings 113 and 113. A large diameter gear 114a integrally fitted to the rear axle 114 is engaged with a small diameter gear 112b integral with the reduction gear shaft 112s.

A hub 17h of the rear wheel 17 is fitted into a portion protruding rightward from the reduction gear cover 25 of the rear axle 114.
Therefore, the rotational speed of the driven shaft 82 is reduced through the reduction gear mechanism 110, and transmitted to the rear axle 114 to rotate the rear wheel 17.

In the triangular air exhaust port 23z formed on the vertical wall of the transmission case 23, a mating face 23w is formed by a front vertical side and an upper inclined side of the opening end face. A lower horizontal side is set along an upper face of the peripheral wall 23cw of the transmission case 23. The opening of the air exhaust port 23z faces the peripheral wall 23cw, and upper space in the rear half of an upper face of the reduction gear case 25, and an air exhaust duct 120 is provided in the space.

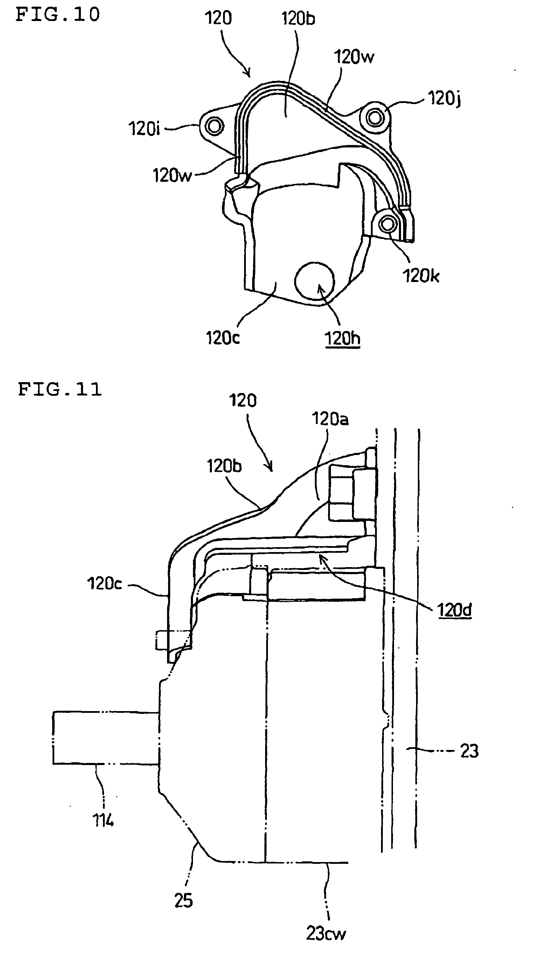

A left side view of the air exhaust duct 120 is shown in Fig. 10, and a front view thereof is shown in Fig. 11.
The air exhaust duct 120 includes a mating face 120w formed by a front vertical side and an upper inclined side facing the mating wall 23w on the opening end face of the air exhaust port 23z of the transmission case 23. A front vertical wall 120a and an upper inclined wall 120b are extended obliquely downward from the mating face 120w to the right. The upper inclined wall 120b is configured to become a side wall 120c hanging downward so as to go around a right side face of the reduction gear case 25.

The side wall 120c hangs downward, and a lower end thereof reaches the vicinity of a peripheral edge of the bearing circular hole 25s to which the rear axle 114 of the reduction gear case 25 is journalled and through which the rear axle 114 passes.
A circular hole 120h is bored in the lower part of the side wall 120c.

As shown in Fig. 10, a mounting boss 120i protrudes forward along the mating face 120w of the air exhaust duct 120, and a mounting boss 120j protrude upward. Another mounting boss 120k is formed so as to be positioned at a rear end of the upper inclined wall 120b and on the right side of the mating face 120w.

On the other hand, while a mounting boss 23i is formed so as to protrude in front of the mating face 23w on the opening end face of the air exhaust port 23z of the transmission case 23, a mounting boss 23j is formed so as to protrude upward, and a mounting boss 23k is formed so as to protrude from the peripheral wall 23cw in the vicinity of the rear end of the mating face 23w (see Fig. 6). The mounting bosses 23i, 23j, and 23k respectively face the mounting bosses 120i, 120j, and 120k of the air exhaust duct 120.

Therefore, the mating face 120w of the air exhaust duct 120 is joined to the mating face 23w on the opening end face of the air exhaust port 23z of the transmission case 23, and corresponding mounting bosses are fastened to each other by a bolt, thereby mounting the air exhaust duct 120 to the opening end face of the air exhaust port 23z of the transmission case 23.

Then, there is formed an air exhaust path that is enclosed by the inner faces of the front vertical wall 120a and the upper inclined wall 120b of the air exhaust duct 120, and the upper face(s) of the peripheral wall 23cw (and the reduction gear case 25) from the air exhaust port 23z. The air exhaust path is bent downward by the side wall 120c, and opened mainly downward.

Thus, on the front part of the transmission chamber 50C, by the rotation of the cooling fan 77 integral with the fixed pulley half body 51s of the drive pulley 51 of the belt continuously variable transmission 50, cooling air is sucked into the transmission chamber 50C from the air intake ports 24r of the transmission case cover 24 through the air intake duct 26. The sucked cooling air flows downward in the transmission chamber 50C, and flows out from the air exhaust port 23z of the transmission case 23 to the outside, toward a body front from a front opening part 120d, mainly along the inner face of the front vertical wall 120a through the air exhaust duct 120, on the rear part of the transmission chamber 50C (see Fig. 11).
In this manner, the cooling air evenly flows from the front part to the rear part in the transmission chamber 50C, thereby efficiently cooling the belt continuously variable transmission 50.

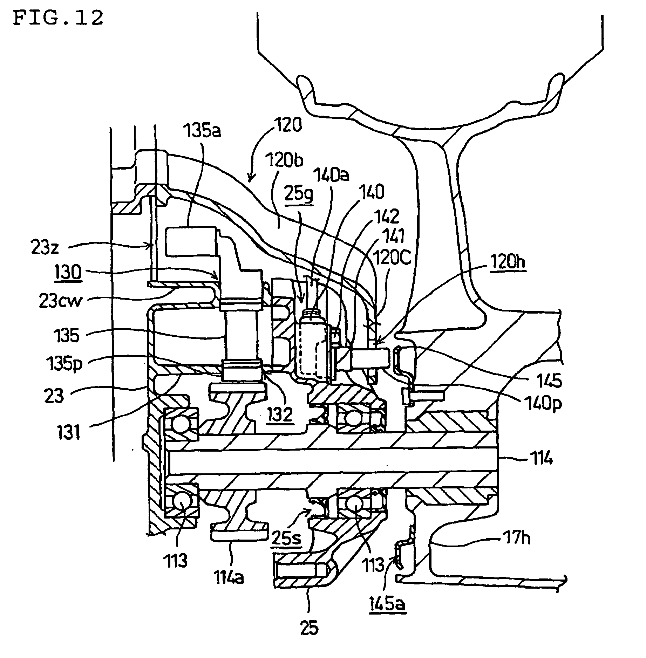

Referring to Fig. 12, a circular hole 130 is bored in an upper wall part of the peripheral wall 23cw of the transmission case 23 extended to the right side of the lower horizontal side of the air exhaust port 23z. Also, a partition wall 131 for partitioning the reduction gear chamber 110C in parallel is provided below the upper wall part. In the partition wall 131, a circular hole 132 is also bored approximately just under the circular hole 130 and at a position opposite to the large diameter gear 114a fitted to the rear axle 114 from above.

A vehicle speed sensor 135 is fitted and fixed to the upper and lower circular holes 130 and 132.
The vehicle speed sensor 135 serves as a magnetic sensor using a pickup coil. A pole piece 135p on a lower end of the vehicle speed sensor 135 is disposed close and opposite to the large diameter gear 114a. The vehicle speed sensor 135 detects passing of a tooth tip of the large diameter gear 114a to detect vehicle speed based on the rotational speed of the rear axle 114.
A signal cable 135a is extended in the air exhaust path from an upper end of the vehicle speed sensor 135.

Referring to Figs. 9 and 12, on the right side of the reduction gear cover 25, a recessed part 25g is formed on the upper part of the bearing circular hole 25s, and a wheel speed sensor 140 for an ABS (Anti-lock Brake System) is mounted so as to be fitted to the recessed part 25g.
A pair of mounting pieces of a mounting bracket 141 for holding the wheel speed sensor 140 is fixed to boss parts on both sides of the recessed part 25g by a screw 142.

The wheel speed sensor 140 also serves as a magnetic sensor using a pickup coil. As shown in Fig. 12, a pole piece 140p protrudes rightward from a lower end of a main body, and passes through the circular hole 120h bored in the side wall 120c of the air exhaust duct 120 with a tip end exposed to the outside.

The tip end of the pole piece 140p is disposed close and opposite to a ferromagnetic annular plate 145 mounted on the left side of the hub 17h of the rear wheel 17. The wheel speed sensor 140 detects passing of a hole 145a formed on the annular plate 145 to detect the wheel speed of the rear wheel 17.
A signal cable 140a is extended from an upper end of the vehicle speed sensor 140.

The vehicle speed sensor 135 mounted on the transmission case 23, and the wheel speed sensor 140 mounted on the reduction gear cover 25 are hidden inside the air exhaust duct 120 except the tip end of the pole piece 140p of the wheel speed sensor 140.

As described above, in the power unit 20, without separately providing a dedicated member for supporting the reduction gear shafts 63s and 65s of the variable speed drive mechanism 60, one transmission case cover 24 for journaling the drive pulley 51 and the driven pulley 81 in cooperation with the transmission case 23 is mounted to the transmission case 23 while also journaling the reduction gear shafts 63s and 65s of the variable speed drive mechanism 60. Therefore, the number of parts and man-hours for assembly can be reduced, and the cost can be reduced. Also, the rigidity of the transmission case itself can be enhanced.

The rotating sensor 75 serving as an operation quantity detecting means for detecting a quantity of the operation of the variable speed drive mechanism 60 using the variable speed driving motor 61 is mounted on the transmission case cover 24. Thus, no dedicated component for supporting the rotating sensor 75 is required, and the rotating sensor 75 can be readily installed in a small layout space.

As also described above, in the power unit 20, the variable speed driving motor 61 of the variable speed drive mechanism 60 is mounted on the motor mounting seat 23m formed on the upper part of the right side of the expansion part 23e expanded upward on the transmission case 23 from a body inside provided with the crank chamber 40C. Therefore, the power unit 20 can be miniaturized, and improved in external appearance without protruding the variable speed driving motor 61 toward the outside of the vehicle body. Also, the power unit 20 is readily protected from water or mud.

Also, since the variable speed driving motor 61 is disposed on the upper part of the largely forward-tilting cylinder block 31, the variable speed driving motor 61 is more readily protected from water or mud, and adhesion of water or mud can be avoided, thereby improving durability of the variable speed driving motor 61.

Furthermore, the crank chamber 40C is provided below the variable speed driving motor 61. Thus, the variable speed driving motor 61 can be surely protected from water or mud, and mounted from the upper part of the unit case 21, thereby easily and surely performing the assembly work.

The variable speed driving motor 61 disposed above the crank chamber 40C of the internal combustion engine 30 is located, along with the starter motor 78 disposed side by side with the variable speed driving motor 61, in the vicinity of the power unit hanger 21h for swingably supporting the power unit 20 on the body frame.
Therefore, it is structurally easy to ensure support strength. Since heavyweight objects such as the variable speed driving motor 61 and the starter motor 78 are disposed together in the vicinity of the power unit hanger 21, inertia force caused by vibration of the power unit can be reduced, and riding vibration can be reduced.
Also, since it is structurally easy to ensure the support strength, support portions of the variable speed driving motor 61 and the starter motor 78 can be reduced in weight, thereby reducing the weight of the power unit 20.
20....Power unit
21....Unit case
21h...Power unit hanger
22....Right unit case
23....Transmission case
24....Transmission case cover
25....Reduction gear cover
30....Internal combustion engine
31....Cylinder block
40....Crankshaft
40C...Crank chamber
50....Belt continuously variable transmission
50C...Transmission chamber
51....Drive pulley
51d...Movable pulley half body
51s...Fixed pulley half body
58....V-belt
60....Variable speed drive mechanism
61....Variable speed driving motor
62....Bearing
63s...First reduction gear shaft
64....Bearing
65s...Second reduction gear shaft
65w...Worm gear
67....Female screw member
70....Male screw member
75....Rotating sensor
76w...Worm wheel
78....Starter motor
81....Driven pulley
82....Driven shaft

## Claims

1. A power unit (20) including:
a unit case (21) composed of a crankcase forming a crank chamber (40C) of an internal combustion engine (30), and a transmission case (23) provided in one side of the crankcase and partly forming a transmission chamber (50C) for storing a belt continuously variable transmission (50); and a transmission case cover (24) for covering the transmission case (23) and forming the transmission chamber (50C), the power unit (20) performing continuous speed variation by changing a winding diameter of a pulley (51) around which a transmission belt (58) of the belt continuously variable transmission (50) is wound, through a variable speed drive mechanism (60) by driving of a variable speed driving motor (61), wherein the transmission case cover (24) is mounted on the transmission case (23) so as to cover the belt continuously variable transmission (50) while journaling a reduction gear of the variable speed drive mechanism (60) along with a drive pulley (51) and a driven pulley (81) of the belt continuously variable transmission (50),
**characterized in that**,
the variable speed driving motor (61) is disposed side by side with a starter motor (78) in the vicinity of a power unit hanger (21h) above the crank chamber (40C) of the internal combustion engine (30).

2. The power unit according to claim 1,
wherein the transmission case (23) and the transmission case cover (24) are joined to each other at mating faces continuously and annularly formed on the same plane.

3. The power unit according to any of the preceding claims,
wherein the transmission case cover (24) is provided with an operation quantity detecting means (75) for detecting a quantity of operation of the variable speed drive mechanism (60) using the variable speed driving motor (61).

4. The power unit according to any of the preceding claims,
wherein the variable speed driving motor (61) is mounted in the transmission case (23) from a body inside provided with the crank chamber (40C).

5. The power unit according to any of the preceding claims,
wherein the internal combustion engine (30) has a cylinder (31) largely tilted forward, and
the variable speed driving motor (61) is disposed on an upper part of the cylinder (31).

6. The power unit according to any of the preceding claims,
wherein the variable speed driving motor (61) is disposed on an upper part of the crank chamber (40C) of the internal combustion engine (30).

## Patentansprüche

1. Krafteinheit (20) mit:
einem Einheitsgehäuse (21), das aus einem Kurbelgehäuse, das eine Kurbelkammer (40C) einer Verbrennungsmaschine (30) bildet, und einem Getriebegehäuse (23), das in einer Seite des Kurbelgehäuses vorgesehen ist und
teilweise eine Getriebekammer (50C) zum Aufnehmen eines kontinuierlich variablen Riemengetriebes (50) bildet, zusammengesetzt ist; und einem Getriebegehäusedeckel (24) zum Bedecken des Getriebegehäuses (23) und Bilden der Getriebekammer (50C), wobei die Krafteinheit (20) durch Ändern eines Umschlingungsdurchmessers einer Riemenscheibe (51), um die ein Getrieberiemen (58) des kontinuierlich variablen Riemengetriebes (50) geschlungen ist, eine kontinuierliche Geschwindigkeitsvariation durch eine Variabelgeschwindigkeits-Antriebseinrichtung (60) durch Antreiben eines Variabelgeschwindigkeits-Antriebsmotors (61) durchführt, wobei der Getriebegehäusedeckel (24) an dem Getriebegehäuse (23) angebracht ist, um das kontinuierlich variable Riemengetriebe (50) zu bedecken, während ein Reduktionsgetriebe der Variabelgeschwindigkeits-Antriebseinrichtung (60) zusammen mit einer antreibenden Riemenscheibe (51) und einer angetriebenen Riemenscheibe (81) des kontinuierlich variablen Riemengetriebes (50) gelagert ist,
**dadurch gekennzeichnet, dass**
der Variabelgeschwindigkeits-Antriebsmotor (61) Seite an Seite zu einem Startermotor (78) in der Nähe eines Krafteinheitshängers (21h) oberhalb der Kurbelkammer (40C) der Verbrennungsmaschine (30) angeordnet ist.

2. Krafteinheit nach Anspruch 1,
bei der das Getriebegehäuse (23) und der Getriebegehäusedeckel (24) bei passenden Flächen, die kontinuierlich und ringförmig auf der gleichen Ebene gebildet sind, aneinandergefügt sind.

3. Krafteinheit nach einem der vorhergehenden Ansprüche,
bei der der Getriebegehäusedeckel (24) mit einer Betriebsmenge erfassenden Einrichtung (75) zum Erfassen einer Menge eines Betriebs der Variabelgeschwindigkeits-Antriebseinrichtung (60) unter Verwendung des Variabelgeschwindigkeits-Antriebsmotors (61) mit einer variablen Geschwindigkeit versehen ist.

4. Krafteinheit nach einem der vorhergehenden Ansprüche,
bei der der Variabelgeschwindigkeits-Antriebsmotor (61) in dem Getriebegehäuse (23) von einem Körper angebracht ist, der innen mit der Kurbelkammer (40C) versehen ist.

5. Krafteinheit nach einem der vorhergehenden Ansprüche,
bei der die Verbrennungsmaschine (30) einen Zylinder (31), der in hohem Maße nach vorne gekippt ist, hat, und
der Variabelgeschwindigkeits-Antriebsmotor (61) auf einem oberen Teil des Zylinders (31) angeordnet ist.

6. Krafteinheit nach einem der vorhergehenden Ansprüche,
bei der der Variabelgeschwindigkeits-Antriebsmotor (61) auf einem oberen Teil der Kurbelkammer (40C) der Verbrennungsmaschine (30) angeordnet ist.

## Revendications

1. Ensemble de propulsion (20), comprenant :
un carter d'ensemble (21), composé d'un carter de vilebrequin formant une chambre de vilebrequin (40C) d'un moteur à combustion interne (30), et un carter de transmission (23) prévu sur un côté du carter de vilebrequin et formant partiellement une chambre de transmission (50C) pour loger une transmission à variation continue (50) à courroie; et un couvercle de carter de transmission (24) pour couvrir le carter de transmission (23) et former la chambre de transmission (50C), l'ensemble de propulsion (20) effectuant une variation continue de vitesse, par modification d'un diamètre d'enroulement d'une poulie (51) autour de laquelle une courroie de transmission (58) et la transmission à variation continue (50) à courroie est enroulée, par l'intermédiaire d'un mécanisme d'entraînement à vitesse variable (60), par entraînement d'un moteur d'entraînement à vitesse variable (61), dans lequel le couvercle de carter de transmission (24) est monté sur le carter de transmission (23), de manière à couvrir la transmission à variation continue (50) à courroie, tout en constituant un support de palier de rotation à un engrenage réducteur du mécanisme d'entraînement à vitesse variable (60), avec une poulie menante (51) et une poulie menée (81) de la transmission à variation continue (50) à courroie,
**caractérisé en ce que**
le moteur d'entraînement à vitesse variable (61) est disposé côté à côte d'un moteur de démarreur (78), à proximité d'une oreille de suspension (21h) de l'ensemble de propulsion, au-dessus de la chambre de vilebrequin (40C) du moteur à combustion interne (30).

2. Ensemble de propulsion selon la revendication 1,
dans lequel le carter de transmission (23) et le couvercle de carter de transmission (24) sont reliés l'un à l'autre, au niveau de surfaces d'ajustement, formées de manière continue et annulaire sur le même plan.

3. Ensemble de propulsion selon l'une quelconque des revendications précédentes, dans lequel le couvercle de carter de transmission (24) est muni de moyens de détection de niveau de fonctionnement (75), pour détecter un niveau de fonctionnement du mécanisme d'entraînement à vitesse variable (60) utilisant le moteur d'entraînement à vitesse variable (61) .

4. Ensemble de propulsion selon l'une quelconque des revendications précédentes, dans lequel le moteur d'entraînement à vitesse variable (61) est monté dans le carter de transmission (23), par un volume intérieur de bloc muni de la chambre de vilebrequin (40C).

5. Ensemble de propulsion selon l'une quelconque des revendications précédentes, dans lequel le moteur à combustion interne (30) comprend un cylindre (31) fortement incliné vers l'avant, et le moteur d'entraînement à vitesse variable (61) est disposé sur une partie supérieure du cylindre (31).

6. Ensemble de propulsion selon l'une quelconque des revendications précédentes, dans lequel le moteur d'entraînement à vitesse variable (61) est disposé sur une partie supérieure de la chambre de vilebrequin (40C) du moteur à combustion interne (30).
